# EUROPEAN PATENT APPLICATION

(11) **EP 3 661 267 A1**
(43) Date of publication of application: **03.06.2020**
(21) Application number: 18306581.2
(22) Date of filing: 29.11.2018
(51) Int. Cl.: H04W 40/36, H04W 36/00

(54) **ACCESS POINT AND METHOD FOR ENABLING UPDATE OF FORWARDING TABLES**

(71) Applicant: InterDigital CE Patent Holdings, 75017 Paris (FR)
(72) Inventor: LETOR, Nicolas, 2650 Edegem (BE); VAN OOST, Koen, 3650 Edegem (BE)
(74) Representative: Ståhl, Björn Niclas

(57) **Abstract**

An access point (300) includes a first communication interface (330) configured for communication with wireless stations in a wireless network managed by the access point (300), a second communication interface (340) configured for communication with devices in a backbone network comprising a further access point and a processor (310) configured to upon being handed over (S415) a mobile station from the further access point, when the mobile station is able to send traffic through the access point, send (S440), via the second communication interface, a message that causes the devices in the backbone network to update their forwarding tables so that traffic intended for the mobile station is sent to the access point.

## Description

### TECHNICAL FIELD

The present disclosure relates generally to wireless networks and in particular to wireless networks with multiple Access Points (APs).

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

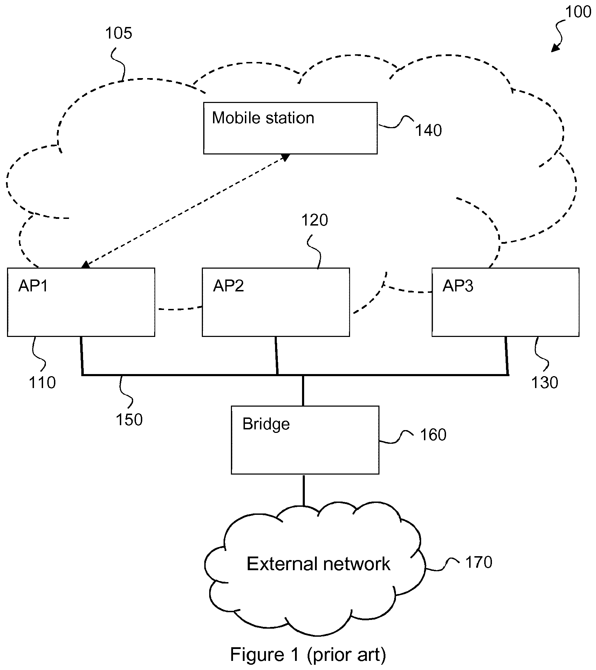

Figure 1 illustrates an exemplary conventional system 100. The system 100 includes a local wireless network 105, such as a Wireless Local Area Network (WLAN), with a plurality of wireless Access Points (APs) 110, 120, 130 and a mobile station 140, which is connected to AP1 110. The WLAN can for example be a Wi-Fi network compatible with IEEE 802.11, a Bluetooth® network or a cellular network. The mobile station 140 can for example be a personal computer, a mobile phone (smartphone) or a tablet.

In such a network, each AP advantageously operates using a channel, i.e. frequencies, distinct from the channel of other network APs in order to avoid interference, the mobile station 140 generally being wirelessly connected to a single AP, such as for example AP1 110. As is well known, there may be situations in which it could be preferable to hand over (also known as a hand off) the mobile station to another AP, such as AP2. Reasons for handing over the mobile station include: load balancing between APs, signal strength problems owing to for instance movement of the mobile station.

The APs 110, 120, 130 are generally connected through a switched backbone network 150 (wired or wireless), called a Distribution System (DS), which is typically a switched Ethernet network, but which also can be other kinds of backbone networks. A bridge 160 is also connected to the backbone network 150. The bridge 160 can be said to be the link between the local wireless network 105 and an external network 170, such as the Internet, including other devices (not shown) such as servers. It is noted that a plurality of bridges can be connected to the backbone network 150. It is also noted that AP1 110 acts as a bridge between the local wireless network 105 and the switched backbone network 150.

A bridge - for example one compliant with IEEE 802.1d, incorporated into IEEE 802.1Q and IEEE 802.1AC - typically employs a reverse path learning algorithm; i.e. from incoming frames (i.e. traffic) from a device (such as the mobile station 140), the bridge records the port and the source identifier, such as a MAC address, to determine which port to use when forwarding frames to that device. Such entries are kept in cache together with an ageing timer. When the ageing timer fires, the entry is removed from cache; in case the cache stores no entry for a destination (MAC) address of an incoming frame, the incoming frame is flooded, i.e. sent to all ports except the source port. A typical ageing timer is set to 300 seconds. Typically, in case an entry for the port and source identifier is already recorded in the cache, no entry is added but the timer is reset.

If, for example, the mobile station 140, which is connected to AP1 110 receives a flow of traffic, typically an Internet Protocol (IP) flow, such as a video stream from a server (not shown) in the external network 170, the flow passes from the server, through the external network 170 to the bridge 160 that, using the cache entries, determines the AP to which it should forward the flow. The bridge 160 then, in this example, forwards the flow to AP1 110 that in turn forwards the flow to the mobile device 140.

However, when the mobile station 140 roams to a new AP, for example AP2 120, the mobile station is then associated with AP2. In conventional solutions such as the one illustrated in Figure 1, the bridge 160 is not informed of the fact that the mobile station has roamed to AP2 and that incoming traffic should be forwarded through AP2 instead of AP1. Thus, the bridge 160 continues to forward incoming traffic to AP1 110. This situation persists until the cache entry for the mobile device 140 is cleared when the ageing timer expires or until the mobile device 140 sends traffic upstream through the bridge which causes the cache entry to be updated. This presupposed traffic going from the mobile station 140 to the bridge 160, but this is not always the case.

A number of conventional solutions address this problem in OSI Layer 3, i.e. the IP Layer. For example, US 2016/0219479 requires the presence of a wireless access controller and storing of IP to Ethernet mappings, while CN 105451221 uses reverse address resolution to find the IP address of a mobile station and then sends an update message to the network to inform that it now handles traffic directed to the IP address. US 7849217 uses home agents and foreign agents to keep track of mobile stations.

US 2008/0310300 discloses a routing system in which a mobile station associates with a base station and one-way traffic is sent to the mobile station. The base station starts a timer, typically set to half of the ageing timer already described; when the timer has expired, the base station determines if only one-way traffic was provided to the mobile station. If so, the base station sends a broadcast update packet to have forwarding tables update.

It will be appreciated that it is desired to have a solution that overcomes at least part of the conventional problems related to updating forwarding tables after roaming of a mobile station. The present principles provide such a solution.

### SUMMARY OF DISCLOSURE

In a first aspect, the present principles are directed to an access point including a first communication interface configured for communication with wireless stations in a wireless network managed by the access point, a second communication interface configured for communication with devices in a backbone network comprising a further access point, and a processor configured to, in response to a mobile station being able to send traffic through the access point upon reception of the mobile station from the further access point in a handover, send, via the second communication interface, a message that causes the devices in the backbone network to update their forwarding tables so that traffic intended for the mobile station is sent to the access point.

In a second aspect, the present principles are directed to a method at a first access point managing a wireless network. The first access point receives a mobile station from a second access point in a handover, and, in response to the mobile station being able to send traffic through the access point, send over a backbone network, a message that causes devices in the backbone network to update their forwarding tables so that traffic intended for the mobile station is sent to the first access point.

In a third aspect, the present principles are directed to a computer program comprising program code instructions executable by a processor for implementing the steps of a method according to any embodiment of the second aspect.

In a fourth aspect, the present principles are directed to a computer program product which is stored on a non-transitory computer readable medium and comprises program code instructions executable by a processor for implementing the steps of a method according to any embodiment of the second aspect.

### BRIEF DESCRIPTION OF DRAWINGS

Preferred features of the present principles will now be described, by way of non-limiting example, with reference to the accompanying drawings, in which:
Figure 1, already described, illustrates an example conventional system;
Figure 2 illustrates an exemplary system according to an embodiment of the present principles;
Figure 3 illustrates an access point according to an example embodiment of the present principles; and
Figure 4 illustrates a flow chart for a method 400 of receiving a roamed mobile station according to an embodiment of the present principles.

### DESCRIPTION OF EMBODIMENTS

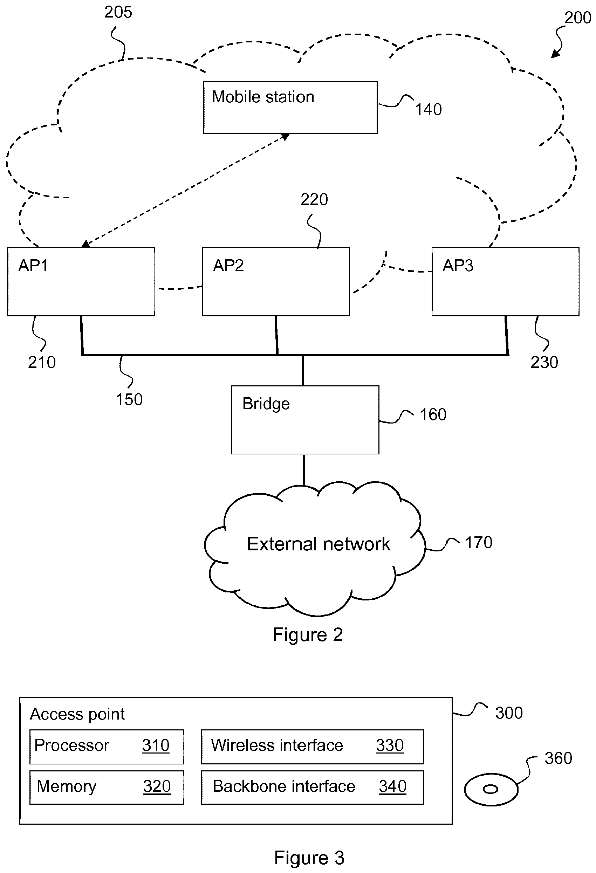

Figure 2 illustrates an exemplary system 200 according to an embodiment of the present principles. The system 200 is quite similar to the conventional system in Figure 1; features like those in Figure 1 have the same reference signs.

The system 200 includes a local wireless network 205, such as a Wireless Local Area Network (WLAN), with a plurality of wireless Access Points (APs) 210, 220, 230 and a mobile station 140, which is connected to AP1 110. The WLAN can for example be a Wi-Fi network compatible with IEEE 802.11, a Bluetooth® network or a cellular network. The mobile station 140 can for example be a personal computer, a mobile phone (smartphone) or a tablet.

In such a network, each AP advantageously operates using a channel, i.e. frequencies, distinct from the channel of other network APs in order to avoid interference, the mobile station 140 generally being wirelessly connected to a single AP, such as for example AP1 210. It should however be noted that for example APs of an Extended Service Set can use the same channel, which can facilitate roaming. As described, the mobile station 140 can roam or be roamed (i.e. hand over or be handed over) to another AP, such as AP2 220.

The APs 210, 220, 230 can be connected through a switched backbone network 150 (wired or wireless), called a Distribution System (DS) such as a switched Ethernet network or other kind of suitable backbone networks. At least one bridge 160, described with reference to Figure 1, is also connected to the backbone network 150, and acts as a link between the local wireless network 205 and the external network 170, e.g. the Internet, including other devices (not shown) such as servers.

When the mobile station 140 roams to a new AP, for example AP2 220, the mobile station is then associated with AP2. After association, the mobile station 140 is typically authorized by the AP to which it is now associated, i.e. AP2 220.

Upon successful authorization, AP2 sends a message on the backbone network 150 on behalf of the mobile station 140, as if the mobile station 140 itself sent the message. The message can also be sent upon successful association, before the authorization. The message can be an Address Resolution Protocol (ARP) message with the Media Access Control (MAC) address of the mobile station 140 or any other suitable message containing the MAC address of the mobile station 140 as the source of the message.

Upon reception of the message, the devices connected to the backbone network 150, i.e. the bridge 160 and the other APs 210, 230, update their forwarding tables. Once the update is effected, any traffic sent from these devices to the mobile station 140 will be sent to the right AP, i.e. AP2; it is noted that special events such as a subsequent ongoing handover still can make these devices send traffic to the incorrect AP.

Figure 3 illustrates an access point AP 300, such as AP2 in Figure 2, according to an example embodiment of the present principles. The AP 300 includes at least one hardware processing unit ("processor") 310, memory 320 and at least one wireless communications interface 330, for example a Wi-Fi interface, configured to communicate with mobile stations, and a backbone interface 340 configured for communication with devices connected to a backbone network. Any suitable communication standard, such as Wi-Fi (IEEE 802.11), Ethernet (IEEE 802.3), and PLC (power-line communication), could be used for the communication over the backbone network.

The processor 300 is configured to perform access point functions including transmission of the message as already described with reference to Figure 2 and to control the access point; the memory 310 is configured to store program code instructions that when executed by the processor 300 enables performing access point functions including transmission of the message as described herein. A computer program comprising such program code instructions executable by the processor is stored on non-transitory computer readable medium 370.

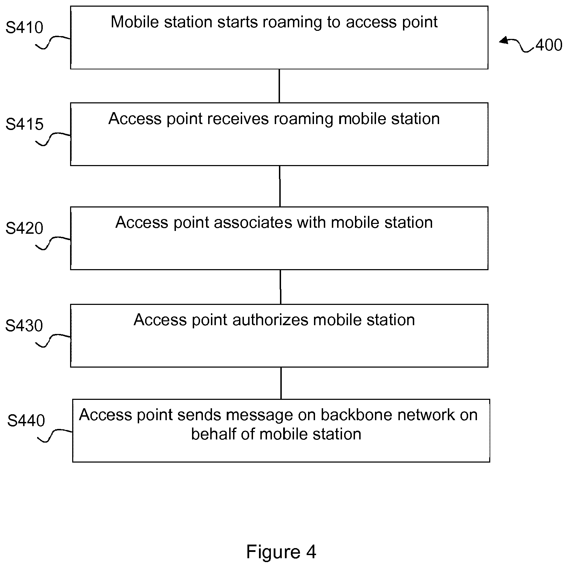

Figure 4 illustrates a flow chart for a method 400 of receiving a roamed mobile station according to an embodiment of the present principles.

In step S410, a mobile station begins roaming from a first AP to a second AP.

In step S415, the second AP receives the roaming mobile station. This can be done by having the mobile station send an authentication request to the second AP that then typically grants authentication. An open key system authentication or a shared key system authentication can be used for the authentication; other possibilities are Fast Transition authentication, see IEEE 802.11r, and Simultaneous Authentication of Equals, see IEEE 802.11s.

In step S420, the second AP associates with the mobile station, which can be done using a conventional association method during which capabilities of the mobile station and the second AP can be exchanged.

In optional step S430, the second AP authorizes the mobile station. It is noted that this is sometimes referred to as a second authentication. The authorization, which can be performed using any suitable conventional method, is for example used when WPA1 or WPA2 security is employed.

In step S440, the second AP sends a message to devices connected to a backbone network on behalf of the mobile station so that other devices connected to the backbone network can update their forwarding tables, as already described. It will be understood that the message when the second AP determines that the mobile station is connected, i.e. when the mobile station is able to receive and transmit data frames through the second AP.

In a variant already described, the second AP sends the message between steps S420 and S430, i.e. between the association and the authorization.

As will be appreciated, the present principles can ensure that a message causing updates of other devices forwarding tables is sent upon successful roaming of a mobile station; this can be done before or after authorization of the mobile station. It is thus not necessary to, for example, determine an IP address of the mobile station; the update can thus occur earlier than in conventional solutions, which can lead to less loss of traffic for the mobile device. In particular, if the message is sent before the mobile device is authorized, this can be done before traffic can be sent to or from the mobile station via the access point.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. An access point comprising:
a first communication interface configured for communication with wireless stations in a wireless network managed by the access point;
a second communication interface configured for communication with devices in a backbone network comprising a further access point; and
a processor configured to:
in response to a mobile station being able to send traffic through the access point upon reception of the mobile station from the further access point in a handover, send, via the second communication interface, a message that causes the devices in the backbone network to update their forwarding tables so that traffic intended for the mobile station is sent to the access point.

2. The access point of claim 1, wherein the processor is configured to send the message upon association with the mobile station but before authorization of the mobile station.

3. The access point of claim 1, wherein the processor is configured to send the message upon successful authorization of the mobile station.

4. The access point of claim 1, wherein the message includes an address of the mobile station as source address of the message.

5. The access point of claim 4, wherein the address is a Media Access Control address.

6. The access point of claim 4, wherein the message is an Address Resolution Protocol message.

7. A method comprising, at a first access point managing a wireless network:
receiving a mobile station from a second access point in a handover; and
in response to the mobile station being able to send traffic through the access point, send over a backbone network, a message that causes devices in the backbone network to update their forwarding tables so that traffic intended for the mobile station is sent to the first access point.

8. The method of claim 7, wherein the message is sent upon association with the mobile station but before authorization of the mobile station.

9. The method of claim 7, wherein the message is sent upon successful authorization of the mobile station.

10. The method of claim 7, wherein the message includes an address of the mobile station as source address of the message.

11. The method of claim 10, wherein the address is a Media Access Control address.

12. The method of claim 10, wherein the message is an Address Resolution Protocol message.

13. Computer program comprising program code instructions executable by a processor for implementing the steps of a method according to at least one of claims 7 to 12.

14. Computer program product which is stored on a non-transitory computer readable medium and comprises program code instructions executable by a processor for implementing the steps of a method according to at least one of claims 7 to 12.
